Europäisches Patentamt

European Patent Office

Office européen des brevets

(11) Numéro de publication: **0 174 259**
**A1**

# (12) DEMANDE DE BREVET EUROPEEN

(21) Numéro de dépôt: 85430021.7

(22) Date de dépôt: 25.07.85

(51) Int. Cl.⁴: **B 62 M 3/08**

(30) Priorité: 27.07.84 FR 8412429

(43) Date de publication de la demande:
12.03.86 Bulletin 86/11

(84) Etats contractants désignés:
BE DE GB IT

(71) Demandeur: **Delafollie, Gérard**
**Chez Mr Mme Duprez François 260 route de Grasse Villa**
**Montolive**
**F-06620 Le Bar sur Loup(FR)**

(72) Inventeur: **Delafollie, Gérard**
**Chez Mr Mme Duprez François 260 route de Grasse Villa**
**Montolive**
**F-06620 Le Bar sur Loup(FR)**

(54) **Ensemble pédale chaussure du type comportant un cale-pédale.**

(57) Ensemble pédale chaussure de type comportant un cale
pédale caractérisé en ce que la pédale comporte une douille
(12) mobile, de forme cylindrique, montée sur l'axe (13), afin
d'assurer le positionnement en référence de la chaussure.
Cette douille (12) comporte un chanfrein (14) pour faciliter
l'introduction de la chaussure sur la pédale, ainsi qu'une
gorge (cavité) (11) pour assurer le maintien en position de
référence de la chaussure. Et que dans la semelle est intégré
un dispositif comprenant une cage (8) réglable, pour positionner en référence la chaussure par rapport á la pédale.
Cette cage est munie d'une part d'un alésage (3), conçu pour
recevoir la dite pédale (12)(13), et, d'autre part d'un dispositif
(5)(6)(7), assurant le maintien en position référence par
encliquetage de la chaussure par rapport à la pédale. Ce
dispositif permet à la chaussure d'être désolidarisé de la
pédale automatiquement, sans action manuelle, ce qui
assure une plus grande sécurité.

Fig. 5

Fig. 5'

Ensemble pédale chaussure du type comportant un cale pédale.

L'invention concerne le domaine du cycle, et plus particulièrement une chaussure munie d'un dispositif permettant un pédalage apportant confort, efficacité et sécurité.

Actuellement est commercialisé un système chaussure à semelle plate ou cambrée, pédale, cale-pied et courroie de serrage. Pour obtenir le meilleur rendement du point de vue énergétique (Pied de l'homme/Pédale de la bicyclette) un cale pédale est fixé sur la semelle de la chaussure. Le but de ce cale pédale est de positionner correctement le pied par rapport à la pédale, cette position référence actuelle est assurée par la scie arrière de la pédale.

Les inconvénients du système actuel sont :

Non référence de la position de la chaussure par rapport à l'axe géométrique de la pédale.

Serrage étranglement de la circulation sanguine dans le pied par la courroie (Sensation d'engourdissement)

Nécessité d'une pièce annexe en saillie sur la chaussure le cale-pied.

Appui sur les quelques $mm^2$ des scies arrière et avant de la pédale. (Pression élevée locale sur la plante des pieds)

Pédale a orienter pour engager le pied sur celle-ci munie du cale-pied et de la courroie.

Difficulté de marche du fait du cale pédale sous la chaussure (forme proéminente).

Impossibilité de retirer le pied, la courroie étant serrée (desserrage à la main).

Un nouveau système pédale chaussure tel que le brevet numéro : 2526 748 remédie à certains inconvénients, mais pas à tous à savoir :

Non référence de la Position de la chaussure par rapport à l'axe géométrique de la pédale.

Pédale à orienter pour engager le pied sur celle-ci

Difficulté de marche du fait des ailerons de chaque côté de la semelle (effet de croque en jambe)

Impossibilité de retirer le pied sans actionner le levier de blocage à la main, d'ailleurs pour assurer le maintien chaussure pédale il fallait action sur ce même levier de la main.

De plus , mouvement non naturel pour échapper le pied de la pédale (recul en arrière des pieds).

L'invention permet de remédier a tous les inconvénients cités ci dessus.

Référence de la position de la chaussure par rapport à l'axe géométrique de la pédale.

(L'idéal serait que l'axe de la pédale puisse traverser le pied par l'articulation du gros orteil, evidemment impossible).

Suppression de la courroie de serrage et du cale-pied (étranglement de la circulation sanguine du pied supprimé ainsi que tous les inconvénients liés à ce fait).

Appui sur toute la surface de la semelle de la chaussure (relativement rigide), plus grande surface donc supression de pression locale sur la plante des pieds.

Non nécessité d'orienter la pédale pour engager la chaussure sur celle-ci.

Aucune difficulté de marche, la semelle est sans forme proéminente ni débordante.

Solidarisation et échappement désolidarisation chaussure pédale sans y porter la main.

De plus l'échappement pédale-chaussure se fait avec un mouvement naturel de réflexe, simplement en écartant les pieds et les jambes. (Mais pas en ayant à reculer les pieds par rapport aux pédales).

Pour atteindre ces buts l'invention propose une pédale et une chaussure idoine conçues suivant leurs caractéristiques les plus générales.

La pédale est constituée d'un axe sur lequel est monté une douille mobile avec chanfrein d'entrée (s) pour maintien en position de référence de la chaussure par rapport à l'axe géométrique de la dite pédale.

D'une chaussure dont la semelle est plus épaisse que d'ordinaire et comportant un orifice dont toute section peut-être envisagée pour recevoir la pédale (section rectangulaire, ou triangulaire, ou oblongue, ou carrée).

Un système de maintien en position de la chaussure par rapport à la pédale. Possible : (cliquet, ressort, anneau élastique, même éventuellement un levier avec ergot). Le système retenu est un cliquet à ressort dont l'effort de maintien en position est réglable.

Il est donné à titre d'exemple non limitatif un mode de réalisation se référant aux dessins ci annexés.

Fig. 1 : Dessin de la pédale.
Fig. 2 : Vue de dessous de la chaussure, détail de la semelle.
Fig. 3 : Vue de profil de la chaussure.
Fig. 4 : Dessin de la cage.

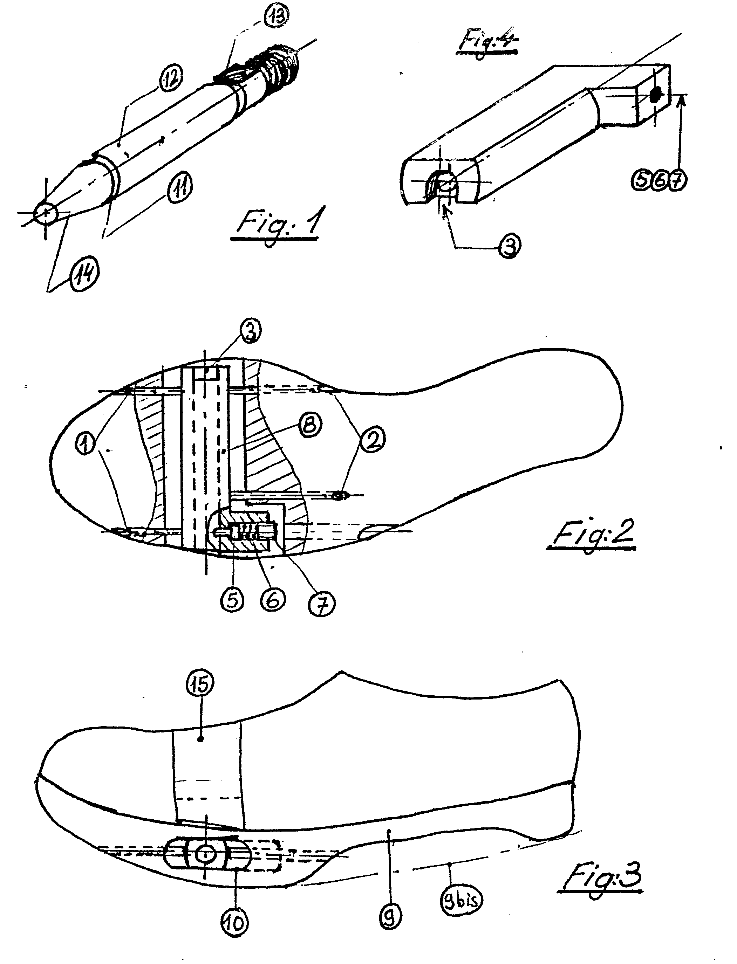

fig 1 La pédale est composée d'un axe(13)fixé dans la manivelle, d'une douille (12) guidée en translation et en rotation par rapport à l'axe (13).

Cette douille comporte : le chanfrein d'entrée (14) et la gorge (11)(cavité), la situation de la gorge peut-être envisagée sur toute la longueur de la pédale.

En variante, la pédale pourrait ne comporter que l'axe (13),dans ce cas la douille (12)serait guidée dans la cage (8) elle même située dans la semelle de la chaussure.

fig 2/3 La semelle de la chaussure (9)est suffisamment rigide réalisable dans tous les matériaux répondant à ce critère (ex. : matière plastique armée).

La surface de la semelle en contact avec le sol peut comporter une forme ou un revêtement anti-dérapant.

La semelle peut avoir différent profil (ex.: 9 et 9 bis).

Dans la semelle est pratiqué l'orifice (alésage)(10) dont toute section peut-être envisagée (rectangulaire, carrée, triangulaire, ou oblongue).

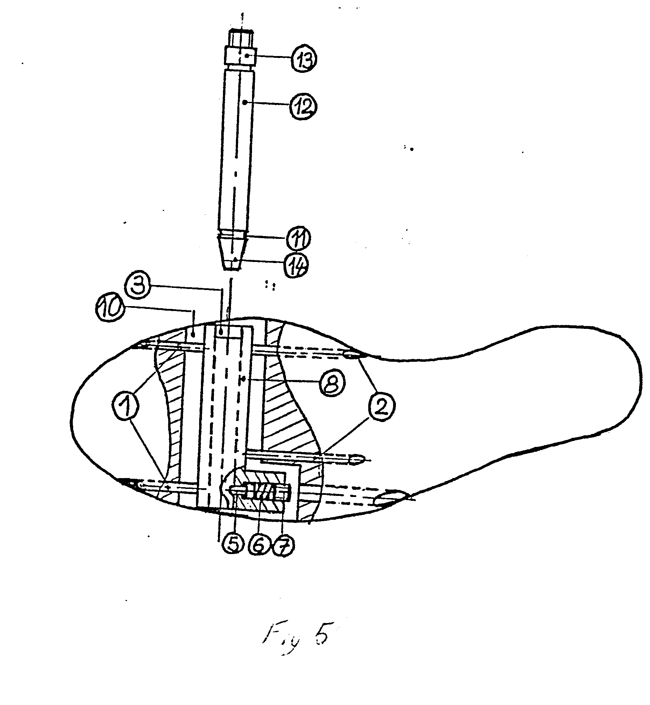

Cet orifice(10)reçoit la cage ( 8 fig 4 ) dont différente forme peuvent être admise. Sur cette cage est monté le système de maintien en position de la chaussure(5 6 7), d'autres disposition sont réalisables.

En variante, la cage peut-être remplacéepar un sys-

tème de joues latérales.

Mais en général tout système répondant à la fonction de (8) peut être admis.

Dans la semelle est pratiqué le passage des systèmes de réglage de la cage (8) Système repéré (1) et (2), situés de part et d'autre de la cage (8), permettant le réglage longitudinal et angulaire de cette cage (8) par rapport à la chaussure (1) et (2) sont des vis (type fixation), mais tous systèmes remplissant cette fonction est envisageable.

Suivant le réglage relatif des systèmes (1) et (2) une légère orientation de la cage (8) est possible (réglage angulaire). Réglages nécessaires selon la morphologie de chacun.

En remarque du point de vue orthopédique la cage (8) pourrait être adaptée à chaque cas particulier (pied incliné transversalement, ou jambe un peu plus courte, longue).

fig 4 Système de maintien en position de la chaussure par rapport à la pédale.

Un cliquet (5), appuyé par un ressort de pression (6), lui même contraint par une vis de pression (7) Cette vis permet le réglage de l'effort sur le cliquet (5), maintenant la chaussure en position.

En variante un (ou des) anneau élastique s'enclenchant dans la (ou les) cavité pourrait remplacer le système ci dessus. (Inconvénient non réglable).

Si toutefois certains ne se trouvaient pas satisfait de l'un de ces systèmes un levier avec ergot pourrait assurer le maintien en position chaussure pédale, mais attention, il faut y porter la main et c'est un réel inconvénient.

La position de ce système de maintien peut être envisagé sur toute la longueur de la pédale ou de la chaussure et en général toutsystème remplissant la fonction de (5 6 7) peut être admis.

En remarque, peu importe la pointure de la chaussure, fonction de celle-ci, la situation du maintien en position de référence de la chaussure sur la pédale sera déterminé lors
de la fabrication.

Pour le fonctionnement, placer l'encoche, extrémité
de l'alésage (3) de la cage (8), au dessus du chanfrein (14)
puis donner le mouvement de pédalage (rotation des manivelles),
la chaussure pénètre d'elle-même sur la pédale et s'encliquète;
la chaussure est maintenue et positionnée en référence.

Pour échapper la chaussure de la pédale, donner un
mouvement d'écart des pieds et des jambes (réflexe naturel) en
continuant de pédaler doucement (sans tirer ni appuyer) et la
chaussure sort de la pédale.

Il est à remarquer , que pour ces opérations aucune
intervention manuelle n'est nécessaire.

Lors du pédalage , en général une grande impression
de  confort et de maintien en position référence du pied par
rapport à l'axe géométrique de la pédale.

L'effet de pression locale sous le pied a disparu,

La crispation du pied a elle même disparue.

Positionnement rigoureux du pied sur la pédale. De
plus, l'axe est auplus près du pied, le plus proche possible de
l'axe des orteils sachant que ce serait l'idéal (voir ci-dessus).

En phase d'appui peu de changement excépté le confort.

En phase de remontée, alors le gain en rendement
énergétique est important : (l'effet de décollement de la
chaussure par rapport à la scie de la pédale a disparu , cela
est dû à l'élasticité du cale-pied et de la courroie même serrée
à "bloc") et de ce fait résulte également un meilleur passage
des deux points morts, car il y a toujours liaison absolue (pas
de déformation)entre pédale et chaussure.

En ce qui concerne la sécurité lors d'un imprévu;
arrêt à un feu tricolore, freinage brutal en peloton, il suffit
d'écarter les pieds tout en pédalant doucement et les chaussures
sortent des pédales.

De plus, chacun peu règler suivant sa force de pédalage l'effort de maintien en position de la chaussure sur la
pédale.

La marche du fait de la forme de la semelle est
naturelle et sans  danger du fait du profil antidérapant.

REVENDICATIONS

1/ Ensemble pédale chaussure du type comportant un cale pédale et un axe (13) caractérisé en ce qu'il est monté sur ce dit axe (13) une douille (12) mobile de forme cylindrique.

Et que dans la semelle est intégré un dispositif comprenant une cage (8) règlable, pour positionner en référence la chaussure par rapport à la pédale. Cette cage est munie d'une part d'un alésage (3), conçu pour recevoir la dite pédale (12) (13), et, d'autre part d'un dispositif (5) (6) (7), de maintien en position de référence par encliquetage de la chaussure par rapport à la pédale. Ce dispositif permet à la chaussure d'être désolidarisée de la pédale automatiquement, sans actions manuelles, ce qui assure une plus grande sécurité.

2/ Ensemble pédale chaussure selon la revendication (1) caractérisé en ce que la douille (12) peut avoir une section soit carrée, soit rectangulaire, soit triangulaire, soit oblongue, l'alésage (3) de la cage (8) ayant pour sa part la section correspondante.

3/ Ensemble pédale chaussure selon la revendication (1) caractérisé en ce que dans une variante la douille (12) est montée mobile dans la cage (8).

4/ Ensemble pédale chaussure selon la revendication (1) caractérisé en ce que la position référence de la chaussure par rapport à la pédale, est assurée par l'axe géométrique de cette pédale, matérialisé par l'axe (13) et la douille (12).

5/ Ensemble pédale chaussure selon la revendication (1) caractérisé en ce que le règlage de la cage (8) est obtenu par au moins deux points, matérialisés par des fixations (1) et (2) situés de part et d'autre de la dite cage (8).

.../...

6/ Ensemble pédale chaussure selon la revendication (1) caractérisé en ce que le dispositif de maintien en position référence est constitué par un cliquet (5) appuyé par un ressort de pression (6), lequel contraint par une vis de pression (7).

7/ Ensemble pédale chaussure selon la revendication (1) caractérisé en ce que le cliquet (5) assure la position par rapport à la gorge (11)de la pédale.

8/ Ensemble pédale chaussure selon la revendication (1) caractérisé en ce que dans une variante le dispositif de maintien est constitué par un anneau élastique venant se positionner sur la gorge (11).

9/ Ensemble pédale chaussure selon la revendication (1) caractérisé en ce que la cage (8) peut avoir des surépaisseurs pour lui permettre d'être adaptée, suivant les besoins aux différents morphologies et traumatismes orthopédiques.

0174259

Fig: 1

Fig.4

Fig: 2

Fig: 3

*Fig 5*

Office européen
des brevets

**RAPPORT DE RECHERCHE EUROPEENNE**

Numero de la demande

EP 85 43 0021

## DOCUMENTS CONSIDERES COMME PERTINENTS

| Catégorie | Citation du document avec indication, en cas de besoin des parties pertinentes | Revendication concernee | CLASSEMENT DE LA DEMANDE (Int Cl 4) |
|---|---|---|---|
| | | | B 62 M 3/08 |
| A | US-A-3 964 343 (LAUTERBACH) <br> * Figures 1-10; colonne 3, lignes 50-68; colonnes 4-6, lignes 1-65 * <br><br> --- | 1 | |
| A | FR-A-2 397 319 (RIVAT) <br> * Figures 1-10; page 2, lignes 26-40; pages 3,4 * <br><br> --- | 1 | |
| P,X | EP-A-0 120 758 (BON) <br> * Figure 1-15; page 3, lignes 27-36; pages 4-7 * <br><br> --- | 1 | |
| D,A | EP-A-0 094 276 (CHRISTOL) <br> * Figures 1-16; page 3, lignes 29-36; pages 4-8 * <br><br> ----- | 1 | |

| | |
|---|---|
| | DOMAINES TECHNIQUES RECHERCHES (Int Cl 4) |
| | B 62 M |

Le présent rapport de recherche a été établi pour toutes les revendications

| Lieu de la recherche | Date d'achèvement de la recherche | |
|---|---|---|
| LA HAYE | 05-11-1985 | VANNESTE R. Examinateur |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant